# EUROPEAN PATENT APPLICATION

(11) **EP 2 043 329 A1**
(43) Date of publication of application: **01.04.2009**
(21) Application number: 07291165.4
(22) Date of filing: 28.09.2007
(51) Int. Cl.: H04L 29/08

(54) **A media-on-demand network, and a method of storing a media asset in a streaming node of the network**

(71) Applicant: Alcatel Lucent, 75008 Paris (FR)
(72) Inventor: Kisel, Andrey, SL6 8DH Berkshire (GB); Robinson, David Cecil, Aldbourne, SN8 2NP Wiltshire (GB)
(74) Representative: Sarup, David Alexander

(57) **Abstract**

A method is provided of storing a media asset in a streaming node of a media-on-demand network. The network comprises a library node connected to a plurality of streaming nodes. The method comprises determining a popularity estimate for the asset at each of a plurality of the streaming node. The popularity estimates are aggregated to provide an aggregate popularity estimate for the asset over multiple streaming nodes. A determination is made whether the aggregate popularity estimate exceeds a predetermine threshold. Upon the threshold being exceeded, the asset is stored in one of the streaming nodes for use in addressing a request for the asset.

## Description

### Field of the Invention

The present invention relates to telecommunications, in particular to media-on-demand networks.

### Description of the Related Art

In known media-on demand networks, a central library node of media assets is connected to multiple streaming nodes that are located near to clients' user terminals. Media assets are, for example, video films, programs, and games, such as films in digital signal format. There arc various known approaches to the distribution of media assets from a library node to streaming nodes, so as to be able to readily provide the assets to user terminals. Some approaches are automatically adaptive, whilst other approaches are more static.

In known static-type approaches, some streaming nodes are grouped together as a single logical entity, and a media asset is distributed to this entity. Human intervention is required to distribute or redistribute assets, for example by adding an asset to the entity, or removing an asset from the entity, dependent on observed popularity.

As regards known adaptive approaches to distribution of media assets, one approach is based on streaming from a library server as described in United States Patent Publications US20050278760 and US 20020194412. Another approach described in United States Patent US 6859840 involves a small portion (known as a prefix) of a media asset being distributed to streaming nodes upfront. The remainder of the asset is then distributed from the library server, in real time, upon customer request.

### Summary of the Invention

The reader is referred to the appended independent claims. Some preferred features are laid out in the dependent claims.

An example of the present invention is a method of storing a media asset in a streaming node of a media-on-demand network. The network comprises a library node connected to a plurality of streaming nodes. The method comprises determining a popularity estimate for the asset at each of a plurality of the streaming nodes. The popularity estimates arc aggregated to provide an aggregate popularity estimate for the asset over multiple streaming nodes. A determination is made whether the aggregate popularity estimate exceeds a predetermined threshold. Upon the threshold being exceeded, the asset is stored in one of the streaming nodes for use in addressing a request for the asset.

In preferred embodiments, the benefit is preserved of adaptively redistributing media assets from library node to streaming node level, based on popularity. Medium popularity assets arc intelligently stored at streaming node level ready for addressing requests for the media asset from users. Excessive storage of the media asset at that level, such as in every streaming node, can be avoided.

### Brief Description of the Drawings

An embodiment of the present invention will now be described by way of example and with reference to the drawings, in which:
Figure 1 is a diagram illustrating a media-on-demand network according to a first embodiment of the present invention,
Figure 2 is a flowchart illustrating operation of the network shown in Figure 1, and
Figure 3 is a flowchart further illustrating operation of the network shown in Figure 1.

### Detailed Description

First we describe a prior proposal (not prior art) before focussing on the embodiments of the present invention.

### Prior Proposal (not prior art)

A prior proposal (not prior art nor an embodiment of the present invention) is a popularity based adaptive content distribution network designed to operate in classical 90-10 or 80-20 models, where for example 90% of user requests are for the most popular 10% of the available media content. In this approach, that 10% or 20% of highly popular content is moved from a remote central library node to streaming nodes closer to users. In such a system, so-called medium popularity assets present a problem.

By medium popularity assets, we mean an asset which has been requested a number of times from a particular streaming node, but for which the rate of requests is below the threshold at which the asset would be downloaded and stored in the streaming node so as to more readily address further user requests for that asset.

The problem is that merely retaining the assets on the remote library node can mean the streaming capacity of the library node is insufficient to meet all user requests for medium popularity assets, resulting in some of those user requests being rejected. To give a quantitative example, say a content distribution network has 1000 assets of which 90 are of high popularity, 10 arc medium popularity assets, and 900 arc of low popularity. Lets assume 1% of users wish to watch each medium popularity asset at peak time. If there are say 10,000 users, then 1% of users will cause 100 simultaneous requests. As there are ten medium popularity assets, this means a library node can experience 100 x 10 = 1000 simultaneous requests for medium popularity assets at the peak time. A library node cannot handle so many such requests in addition to its usual processes. These usual processes are adaptive content redistributions to streaming nodes; in other words, updating assets stored in streaming nodes based on recent popularity. In consequence, some user requests get rejected. This cause of rejection of user requests can be considered a "bottle-neck".

When considering this above-mentioned system, the inventors realised that the problem of how best to handle assets of medium popularity could be addressed.

We now turn to describing embodiments of the invention. The preferred network resolves the bottle-neck by moving medium popularity assets intelligently and appropriately down to streaming node level whilst preserving the benefit of adaptively redistributing media assets based on popularity.

### Media-on-Demand Network

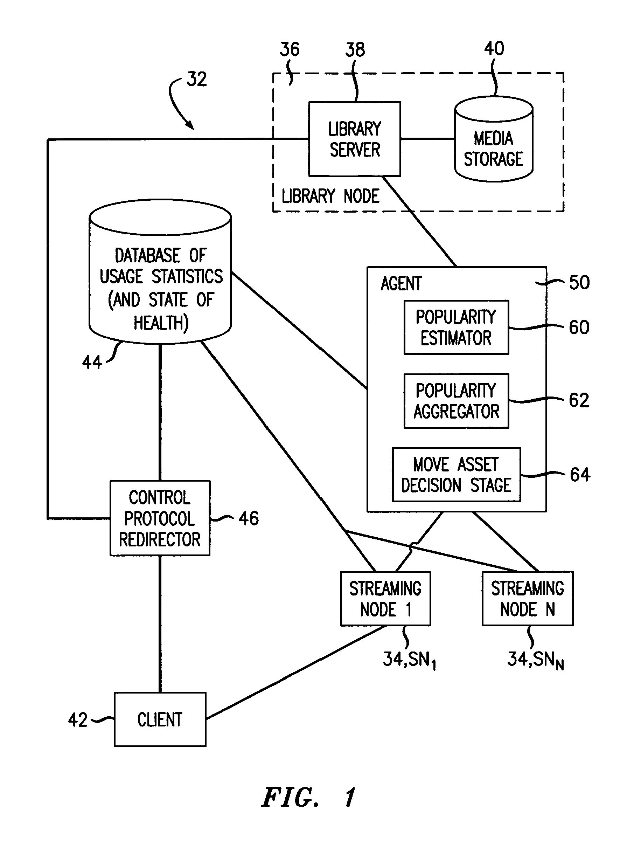

As shown in Figure 1, a media-on demand delivery network 32 consists of local media delivery nodes, denoted streaming nodes 34, connected to a central library node 36 which includes a processor 38 and a database 40 of media assets such as films in digital format. For simplicity only one library node 36 and a two streaming nodes 34 are shown in Figure 1. In this example, the media is video.

The library node 36 is typically not located close to end users, and there are fewer library nodes 36 than streaming nodes 34. The library node 36 primarily acts to distribute assets to streaming nodes, but also, secondarily, itself serves some media-on-demand requests from users. The processor 38 is for handling the media assets stored in the database 40.

The streaming node 34 is a node that serves requests for media-on-demand. The streaming node 34 includes a media store of a size that cannot store all media assets on offer to end users, but can store some of those media assets. One end user terminal 42 is shown in Figure 1 for simplicity. Each streaming node 34 is usually located geographically close to end users, and is considered the preferred streaming node for nearby users. An individual streaming node cannot itself hold all of the media assets available in the library node.

The network also includes a persistent storage 44, namely a Remote Data Base Management System, RDBMS, that is connected to the processor 38. The persistent storage stores usage statistics, namely observed popularity information, for example number of requests per time interval for each media asset over a longer time window. The time interval is set dependent upon media type.

There is a control protocol redirector 46 connected to the persistent storage 44 and the library node processor 38. The control protocol redirector 46 is the initial access and control point for media-on-demand requests 48 from users.

The library node processor 38 includes a distribution agent 50 operative to estimate future popularity of a media asset dependent upon observed popularity data from the persistent storage 44 and to decide whether to distribute that asset to a streaming node 34 in consequence. The distribution agent 50 includes a popularity estimator 60, a popularity aggregator 62, and a decision-stage 64.

### Operation

Operation of the network (shown in Figure 1) will now be described, firstly relating to determining aggregated popularity for an asset amongst a group of streaming nodes, then relating to which of the group of streaming nodes should receive the asset for storage.

### Estimating Popularity

Referring to Figure 1, a new asset is stored in the library node 36, after which the agent 50 determines, based on estimated popularity EP calculated in its popularity estimator 60, whether the asset is sufficiently popular to be stored in the appropriate streaming node to serve users who are likely to request that asset. The network is adaptive. A more popular asset is moved to the streaming node. A less popular asset is removed from the streaming node if required to make storage space available for a more popular asset.

Estimated popularity EP is a predetermined function of predicted popularity PP and observed popularity OP. For example, predicted popularity PP may be provided by considering level of cinema box office success, effect of special promotions. For example, observed popularity OP is provided from records of user requests stored in database 44 of the network 32.

In this example implementation, expected popularity EP is calculated as follows:
For an existing asset of lowering popularity (OP_{*NOW-*1}> OP_{NOW}), EP = ½( OP*_{NOW}*-1+OP_{NOW}).
For a new asset of lowering popularity (PP_{*NOW-*1}> OP_{NOW}), EP = ½( PP_{*NOW*1}+OP_{NOW}).
For an existing asset of rising popularity (OP_{*NOW*-1}< OP_{NOW}), EP = OP_{NOW}.
For a new asset of rising popularity (PP_{*NOW-*1}< OP_{NOW}), EP = OP_{NOW}.

### Determining aggregated popularities, and if sufficiently popular, selecting a streaming node to store the asset

In this example, the popularity of a media asset at a streaming node is determined as described in the section above, then the probability of the media asset across a group of streaming nodes is determined.

Specifically, the agent 50 determines, in its popularity aggregator 62, aggregate popularity of an asset amongst a group of streaming nodes. Dependent on the determined aggregate popularity, the agent 50 controls, using its move asset decision stage 64, the processes of having a sufficiently popular asset stored in a streaming node which is a member of that group, or an insufficiently popular asset removed from the selected member if required.

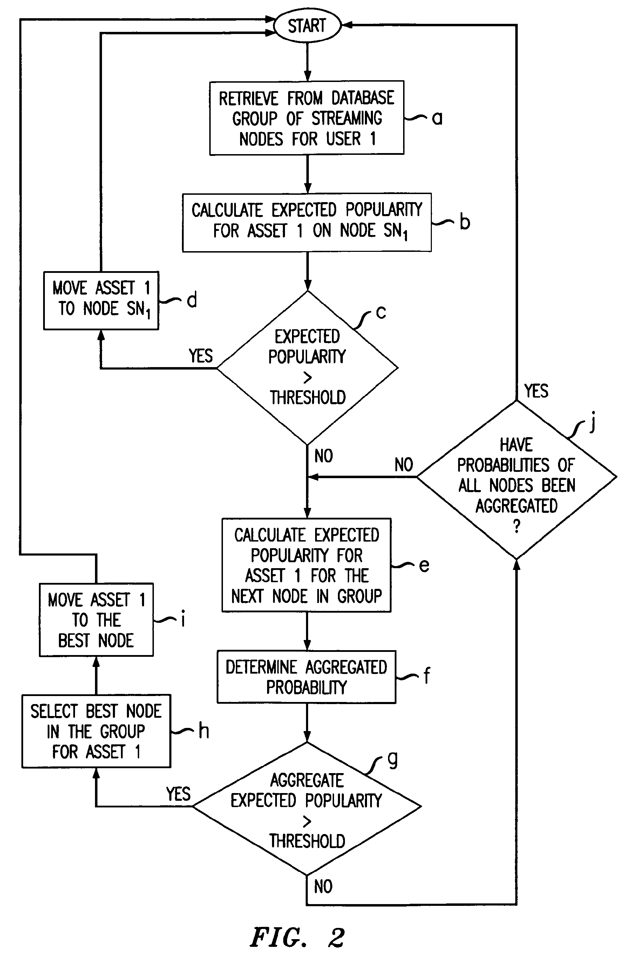

For example, as shown in Figure 2, for a client user terminal, the group of streaming nodes that are able to provide service to the user is identified (step a) from information stored in the database 44. Say there are N streaming nodes in the group, denoted SN₁, SN_{2,} .... SN_{N.} For a particular media asset, the expected popularity EP at SN₁ is calculated (step b). A determination is made (step c) whether the expected popularity exceeds a predetermined threshold. If yes, then the media asset 1 is downloaded and stored (step d) at streaming node SN₁, and a return is made to the start and hence step a, and so the method continues). If no, namely the expected popularity docs not exceed the threshold, then the expected popularity EP is calculated (step e) for a next streaming node in the group.

The expected popularities are aggregated (step f) by being summed. Next, a determination is made as to whether the aggregated popularity (step g) exceeds the predetermined threshold. If yes, the best streaming node in the group to store the media asset is determined (step h) for example, by determining which has the most remaining memory available. The media asset is then transferred and stored (step i) from the library node 36 to that streaming node, (and a return is made to the start and hence step a, and so the method continues).

If no, namely the aggregate expected popularity is not greater than the threshold, then a determination is made (step j) whether the expected popularities for that media asset at all streaming nodes in the group have been aggregated. If the answer to the step j determination is no, a return is made to step e as shown in Figure 2, such that the expected popularity for that asset for the next streaming node in the group is calculated. According there are one or more iterations of steps e,f,g, until either step i is reached, or at step j the answer to the question whether expected probabilities of all nodes have been aggregated is yes, in which case a return is made to the start and the process repeats.

In an alternative, otherwise similar, embodiment (not shown) after step d a return is instead made to step e, and after step i a return is instead made to step e; in each case with adjustment of the popularity threshold to factor in recent content distribution.

### Handling a service request

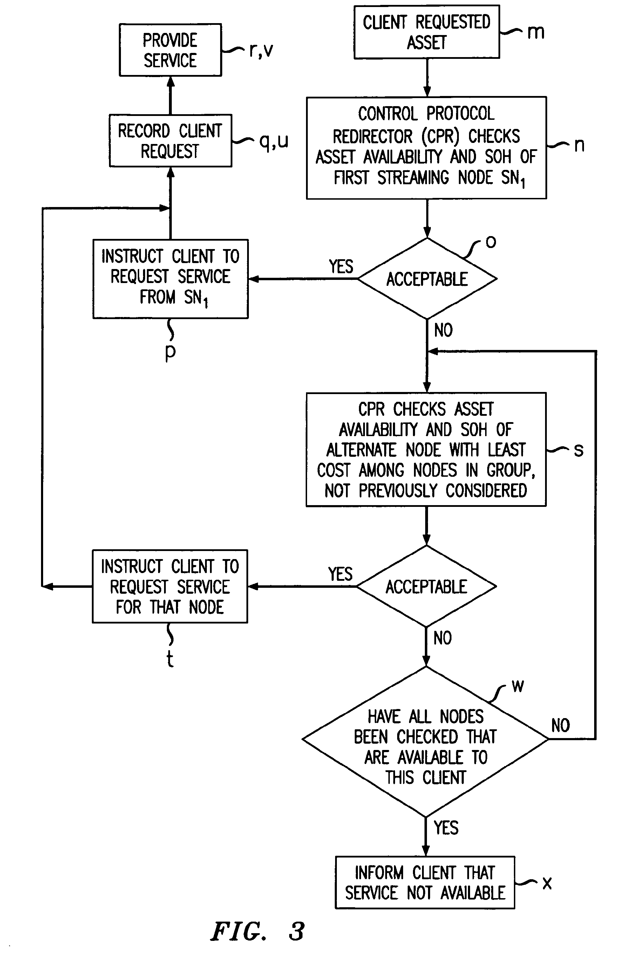

As shown in Figure 3, a client user terminal 42 requests (step m) a particular media asset, such as a film, news report etc. The control protocol redirector 46 checks (step n) both media asset availability and the state of health, SOH, of the first streaming node SN₁ in the group. A determination is made (step o) as to whether they arc acceptable. If yes, the client user terminal is requested (step p) to request service (namely provision of that media asset) from the first streaming node SN₁. The service request from this client user terminal 42 is then recorded (step q) in the database 44 of usage statistics, and then the service is provided (step r).

If the determination (step o) is that the media asset availability and state of health are not both acceptable for the first streaming node then the control protocol redirector 46 goes on to check (step s) the media asset availability at, and state of health of, an alternate node. An alternate node is chosen that has the lowest cost function in providing the requested service from amongst the nodes in the group that have not been previously considered for providing the requested service. The cost function depends, for example, on the amount of network resources required such as bandwidth and processing power.

If the media asset availability and state of health are both found acceptable, then the client user terminal is requested (step t) to request service from that node. The client request is then recorded (step u) as provided by that serving node and that serving node provides (step v) the service.

On the other hand, if the media asset availability and state of health are not both found to be acceptable, then a query is made (step w) as to whether all nodes in the group have been considered. If yes, the client user terminal is informed (step x) that the requested service is not available. If no, a return is made to step s, and a further node is evaluated. The further node is the one that has the lowest cost function amongst the nodes that are in the group but have not already been considered.

### Some variants

In an otherwise similar embodiment, expected popularity EP is predicted popularity PP. In an otherwise similar embodiment, expected popularity EP is observed popularity OP.

In some embodiments, the method of determining estimated popularity for a media asset at a streaming node for the purpose of subsequent aggregation across a group of streaming nodes can be different to the method used to determine estimated popularity for the streaming node individually.

In some embodiments, selection of streaming node to provide the service can be made dependent upon alternative or additional factors or criteria, such as level of streaming node loading.

In some embodiment, if the streaming nodes in a group are unable to provide the requested media asset in response to a service request, then the media asset is provided from the library server in response to the request without being stored at a streaming node for subsequent use.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of storing a media asset in a streaming node of a media-on-demand network comprising a library node connected to a plurality of streaming nodes, the method comprising:
determining a popularity estimate for the asset at each of a plurality of the streaming nodes;
aggregating the popularity estimates to provide an aggregate popularity estimate for the asset over multiple streaming nodes;
determining whether the aggregate popularity estimate exceeds a predetermined threshold;
upon the threshold being exceeded, storing the asset in one of the streaming nodes for use in addressing a request for the asset.

2. A method according to claim 1, further comprising recording data over a time period of user requests received by the streaming nodes for the media asset so as to provide the popularity estimates.

3. A method of serving a user request for the media asset, the user having multiple associated streaming nodes, the method comprising:
storing the media asset in a streaming node according to claim 1;
checking in turn at least some the streaming nodes to determine whether the requested media asset is stored in the streaming node; aud
upon the media asset being detected, the streaming node in which the media asset is stored being operative to provide the media asset to the user.

4. A method according to claim 3, in which said checking step further comprises checking the operability of the streaming node, and if the streaming node is inoperative, at least one further streaming node is checked until an operative streaming node in which the media asset is stored is identified.

5. A media-on-demand network comprising a library node connected to a plurality of streaming nodes, and a processor;
the processor comprising a popularity estimator, and aggregate popularity estimator and a decision stage;
the popularity estimator being operative to determining a popularity estimate for the asset at each of a plurality of the streaming nodes;
the aggregate popularity estimator being operative to aggregate the popularity estimates to provide an aggregate popularity estimate for the asset over said plurality of streaming nodes;
the decision stage being operative to determine whether the aggregate popularity estimate exceeds a predetermined threshold;
upon the threshold being exceeded the library node being operative to provide the media asset to at least one of the streaming nodes, said at least one of the streaming nodes storing the media asset.

6. A media-on-demand network according to claim 5, further comprising a memory operative to record data over a time period of user requests received from user terminals by the streaming nodes for the media asset so as to provide the popularity estimates.

7. A media-on-demand network according to claim 5 or claim 6, further comprising a checking stage operative to check in turn at least some the streaming nodes to determine whether a media asset requested by a user terminal is stored in the respective streaming node; and the streaming node in which the media asset is stored being operative to provide the media asset to the user terminal.

8. A media-on-demaud network according to claim 7, in which the network is operative to instruct the user terminal to request the media asset from the streaming node determined as being one in which the media asset is stored.

9. A media-on-demand network according to claims 7 or 8, in which the checking stage in use also checks the operability of the streaming node, and if the streaming node is inoperative, at least one further streaming node is checked until an operable streaming node in which the media asset is stored is identified.

10. A media-on-demand network according to any of claims 5 to 9, in which the processor comprises a media asset distribution control agent.
